# EUROPÄISCHE PATENTSCHRIFT

(11) **EP 1 796 937 B1**
(45) Veröffentlichungstag und Bekanntmachung des Hinweises auf die Patenterteilung: **10.11.2010**
(21) Anmeldenummer: 05796829.9
(22) Anmeldetag: 22.09.2005
(51) Int. Cl.: B60N 2/68

(54) **METALLSTRUKTUR UND FAHRZEUGSITZ**
METAL STRUCTURE AND VEHICLE SEAT
STRUCTURE METALLIQUE ET SIEGE DE VEHICULE

(30) Priorität: 01.10.2004 DE 102004048351
(43) Veröffentlichungstag der Anmeldung: 20.06.2007
(73) Patentinhaber: Johnson Controls GmbH, 51399 Burscheid (DE)
(72) Erfinder: BLANKART, Axel, 42799 Leichlingen (DE)
(74) Vertreter: Hemmelmann, Klaus
(86) Internationale Anmeldenummer: PCT/EP2005/010268
(87) Internationale Veröffentlichungsnummer: WO 2006/037486

(56) Entgegenhaltungen:
- DE-A1- 19 757 060
- DE-A1- 19 905 215
- US-A- 5 895 096

## Beschreibung

Die Erfindung betrifft eine Metallstruktur für einen Fahrzeugsitz, insbesondere für die Rückenlehne eines Kraftfahrzeugsitzes, mit einer vorzugsweise tiefgezogenen Vorderschale und einer vorzugsweise tiefgezogenen Hinterschale sowie mindestens einem mittels einer Befestigungslasche an der Metallstruktur befestigten Beschlag, wobei die Befestigungslasche zwischen Vorderschale und Hinterschale angeordnet ist.

### Stand der Technik

Eine gattungsgemäße Metallstruktur für die Rückenlehne eines Fahrzeugsitzes ist aus der Offenlegungsschrift DE 199 05 215 A1 bekannt. Sie besteht aus einer einstückig gepressten Hinterschale mit einem mit Durchbrüchen versehenen inneren Flächenbereich, von dem aus sich randseitig eine rechtwinklige Abkantung nach vorne erstreckt, sowie aus einer einstückig gepressten Vorderschale mit einem inneren Flächenbereich, der randseitig eine sich in rechtem Winkel nach hinten erstreckende Abkantung aufweist. Im inneren Flächenbereich der Vorderschale sind Ausstanzungen dergestalt vorgesehen, dass die verbleibenden Blechbereiche eine wellenartige Federstruktur aufweisen. Vorder- und Hinterschale weisen an allen Orten im Wesentlichen die gleiche Wanddicke auf und sind im Bereich der sich überlappenden Abkantungen miteinander durch Punktschweißung verbunden. Der in dieser Weise erzeugte Grundkörper wird nachfolgend auf seiner Außenseite partiell mit Polyurethanschaum überzogen.

Im Bereich der Anbindung der Neigungsversteller (Recliner) sind die Seitenflächen der Hinterschale mit U-förmigen Sicken versehen. In diese rinnenartigen Vertiefungen werden die Befestigungslaschen der Neigungsversteller eingesetzt und verschraubt. Durch die aufgesetzte Vorderschale werden die rückenlehnenseitigen Befestigungslaschen später vollständig verdeckt.

Den gleichen Aufbau kann auch die Metallstruktur des Sitzteils aufweisen.

Dieses Fertigungskonzept ist grundsätzlich zur Fertigung hochwertiger Fahrzeugsitze geeignet. Da die Krafteinleitung aus den Befestigungslaschen in den Grundkörper nur über die Hinterschale erfolgt, ist diese aus einem Blech mit einer relativ großen Wanddicke gefertigt. Das Gewicht der Metallstruktur ist entsprechend hoch.

Eine andere Rückenlehne für einen Fahrzeugsitz wird in der Offenlegungsschrift DE 197 57 060 A1 offenbart. Die Rückenlehne besteht aus einem faserverstärktem, thermoplastischen Verbundwerkstoff und ist unter Ausbildung eines Hohlprofils aus zwei Halbschalen zusammengesetzt. In die Halbschalen sind im Bereich des Hohlprofils einander gegenüberliegende Inserts eingelassen, welche die Beschlagteile eines Lehnenneigungsverstellers haltende Bolzen aufnehmen.

### Aufgabe

Der Erfindung liegt die Aufgabe zugrunde, eine Metallstruktur für einen Fahrzeugsitz mit einem niedrigen Gewicht bei ausreichender Festigkeit, bereitzustellen, welche konstruktiv einfacher ausgebildet und leichter zu fertigen ist.

### Lösung

Die Aufgabe wird bei einer gattungsgemäßen Metallstruktur dadurch gelöst, dass Vorderschale und Hinterschale bereichsweise unter Ausbildung eines Hohlraums beabstandet sind, wobei der Hohlraum eine die Befestigungslasche aufnehmende Verengung aufweist und die Befestigungslasche mit Vorderschale und Hinterschale verbunden ist. Durch diese Verbindung werden die Kräfte, insbesondere unfallbedingte Überlasten, homogener in die Metallstruktur eingeleitet, so dass diese insgesamt dünnwandiger und leichter ausgeführt werden kann. Darüber hinaus ist die Befestigungslasche auf einfache Weise axial gesichert.

Mit Vorteil liegen Vorderschale und Hinterschale dabei an einer Flächenseite der Befestigungslasche an, wobei die Befestigungslasche mit Vorderschale und Hinterschale verbunden ist.

Die Befestigungslasche des Beschlags ist vorzugsweise plattenförmig ausgebildet. Bei dieser Ausbildung kann die Befestigungslasche im Bereich der Anlage mit der Vorderschale und/oder Hinterschale, vorzugsweise durch Laserschweißen, verbunden werden.

Infolge der günstigen Krafteinleitung in die Metallstruktur können Vorderschale und Hinterschale aus Stahl-Dünnblech, beispielsweise aus QSTE 420, bestehen. Ein geeignetes Stahl-Dünnblech weist eine Wanddicke von 0,4 mm bis 0,6 mm, vorzugsweise etwa 0,5 mm, auf.

Der Beschlag kann beispielsweise als Neigungsverstellvorrichtung für die Rückenlehne eines Kraftfahrzeugsitzes ausgebildet sein. Derartige Beschläge übertragen im Falle eines Unfalls besonders hohe Kräfte von der Rückenlehne in das Sitzteil, wobei sowohl Sitzteil als auch Rückenlehne besonders leichtgewichtig auszuführen sind.

### Figuren

Die Figuren stellen beispielhaft und schematisch verschiedene Ausführungen der Erfindung dar.
- Fig. 1: eine perspektivische Darstellung der Komponenten der Metallstruktur des Fahrzeugsitzes,
- Fig. 2: einen Schnitt entlang der Ebene A in Fig. 1 nach Abschluss der Montage der dort dargestellten Komponenten in einer ersten Ausbildung (Fig. 2a) und einer zweiten Ausbildung (Fig. 2b),
- Fig. 3: einen entsprechenden Schnitt durch die Ebene B in einer ersten Ausbildung (Fig. 3a) und einer weiteren Ausbildung (Fig. 3b).

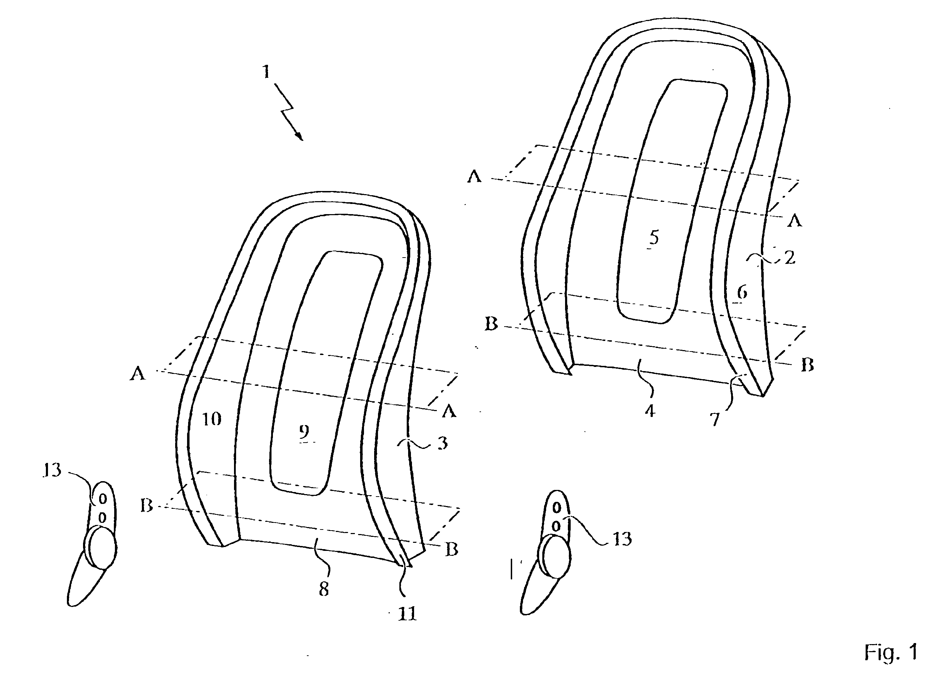

Die Metallstruktur 1 nach Fig. 1 besteht aus einer Hinterschale 2 und einer Vorderschale 3, die jeweils einstückig aus einem Stahl-Dünnblech aus QSTE 420 mit einer gleichförmigen Wanddicke von etwa 0,5 mm gepresst sind und mittig Ausstanzungen 5, 9 aufweisen. Das Gewicht jeder Schale beträgt etwa 700 g.

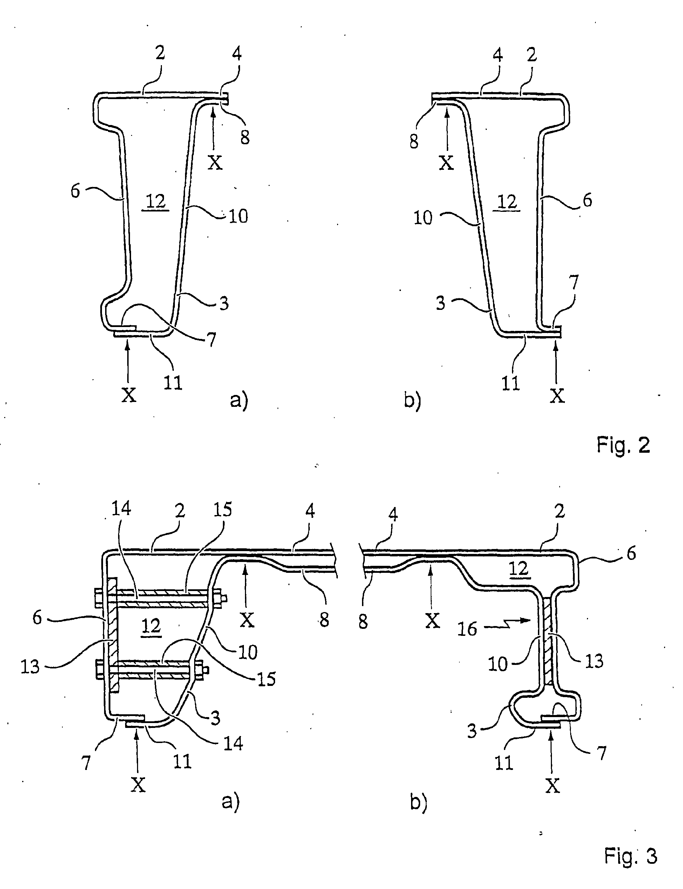

Wie aus den in Fig. 2a und Fig. 3 gezeigten Schnitten A und B durch die zusammengesetzte Metallstruktur 1 ersichtlich, besitzt die Hinterschale 2 einen hinteren, inneren Flächenbereich 4 mit einer mittigen, etwa rechteckigen Ausstanzung 5, von der aus sich randseitig eine erste (ihrerseits noch mehrfach gefalzte) Abkantung 6 in einem Winkel von 90° nach vorne erstreckt. Am vorderen Ende der ersten Abkantung 6 ist eine zweite Abkantung 7 angeformt, die um 90° nach innen abgewinkelt ist. Der innere Flächenbereich 4 und die zweite Abkantung 7 verlaufen somit im Wesentlichen zueinander parallel und bezüglich der ersten Abkantung 6 in gleicher Richtung. Die erste Abkantung 6 und die zweite Abkantung 7 laufen dabei um die Seiten und die Oberkante der Hinterschale 2 herum, während die Unterkante der Hinterschale 2 abkantungsfrei ist.

Die Vorderschale 3 ist gleichfalls mit einem hinteren, inneren Flächenbereich 8 mit zentraler Ausstanzung 9 versehen, von dem aus sich eine erste Abkantung 10 im rechten Winkel nach vorne erstreckt. Daran schließt sich eine nach außen gerichtete zweite Abkantung 11 an. Der innere Flächenbereich 8 und die zweite Abkantung 11 sind zueinander erneut parallel, erstrecken sich jedoch von der ersten Abkantung 10 her in unterschiedliche Richtungen. Auch bei der Vorderschale 3 ist nur die Unterkante frei von Abkantungen.

Darüber hinaus ist der innere Flächenbereich 8 der Vorderschale 3 kleiner ausgebildet als der innere Flächenbereich 4 der Hinterschale 2. Bei der Fertigung der Metallstruktur 1 werden Vorderschale 3 und Hinterschale 2 so ineinander gesetzt, dass die inneren Flächenbereiche 4, 8 sowie die zweiten Abkantungen 7, 11 aufeinanderliegen und miteinander in Richtung der gleichgerichteten Pfeile X durch Laserschweißen verbindbar sind. Infolge der unterschiedlich großen Ausbildung der inneren Flächenbereiche 4 und 8 entsteht dabei ein U-förmig um den Rand der Metallstruktur 1 umlaufender Hohlraum 12, welcher die Torsionssteifigkeit der Metallstruktur 1 vergrößert. Die zweite Abkantung 7 der Hinterschale 2 kann alternativ, wie in Fig. 2b gezeigt, nach außen weisen und im Überlappungsbereich mit der zweiten Abkantung 11 der Vorderschale 3 verschweißt werden. Ebenso ist denkbar, die zweite Abkantung 7, 11 von Vorderschale 3 bzw. Hinterschale 2 beide nach innen auskragen zu lassen.

Wie aus Fig. 3a ersichtlich, ist die plattenförmige Befestigungslasche 13 eines Sitzneigungsverstellers innerhalb des Hohlraums 12 zwischen Hinterschale 2 und Vorderschale 3 der Metallstruktur angeordnet und über Schrauben 14 mit Vorderschale 3 und Hinterschale 2 verbunden. Während die Befestigungslasche 13 an der ersten Abkantung 6 der Hinterschale 2 unmittelbar anliegt, überbrücken Distanzhülsen 15 den Abstand zwischen der Befestigungslasche 13 und der ersten Abkantung 10 der Vorderschale 3.

Hinsichtlich der Krafteinleitung noch günstiger ist die in Fig. 3b dargestellte Ausbildung, bei welcher die Befestigungslasche 13 in einer Verengung 16 des Hohlraums 12 angeordnet und sowohl mit der Vorderschale 3 als auch mit der Hinterschale 2 durch Laserschweißen unmittelbar verbunden ist. Sowohl die erste Abkantung 6 der Hinterschale 2 als auch die zweite Abkantung 10 der Vorderschale 3 sind bei dieser Ausführung im unteren Bereich der Metallstruktur 1 ihrerseits mehrfach gefalzt, um die Verengung 16 zu erzeugen. Diese Falzungen erhöhen ferner die Steifigkeit der Metallstruktur im Bereich der Krafteinleitung des Sitzneigungsverstellers nochmals.

### Bezugszeichen

- 1: Metallstruktur
- 2: Hinterschale
- 3: Vorderschale
- 4: innerer Flächenbereich
- 5: Ausstanzung
- 6: erste Abkantung
- 7: zweite Abkantung
- 8: innerer Flächenbereich
- 9: Ausstanzung
- 10: erste Abkantung
- 11: zweite Abkantung
- 12: Hohlraum
- 13: Befestigungslasche
- 14: Schraube
- 15: Distanzhülse
- 16: Verengung

## Patentansprüche

1. Metallstruktur (1) für einen Fahrzeugsitz, insbesondere für die Rückenlehne eines Kraftfahrzeugsitzes, mit einer vorzugsweise tiefgezogenen Vorderschale (3) und einer vorzugsweise tiefgezogenen Hinterschale (2) sowie mindestens einem mittels einer Befestigungslasche (13) an der Metallstruktur befestigten Beschlag, wobei die Befestigungslasche zwischen Vorderschale und Hinterschale angeordnet ist, **dadurch gekennzeichnet, dass** Vorderschale (3) und Hinterschale (2) bereichsweise unter Ausbildung eines Hohlraums (12) beabstandet sind, wobei der Hohlraum eine die Befestigungslasche (13) aufnehmende Verengung (16) aufweist und die Befestigungslasche (13) mit Vorderschale (3) und Hinterschale (2) verbunden ist.

2. Metallstruktur (1) nach Anspruch 1, **dadurch gekennzeichnet, dass** Vorderschale (3) und Hinterschale (2) jeweils an einer Flächenseite der Befestigungslasche (13) anliegen und die Befestigungslasche (13) mit Vorderschale (3) und Hinterschale (2) verbunden ist.

3. Metallstruktur nach Anspruch 1 oder 2, **dadurch gekennzeichnet, dass** die Befestigungslasche (13) des Beschlags plattenförmig ausgebildet ist.

4. Metallstruktur nach Anspruch 2 oder 3, **dadurch gekennzeichnet, dass** die Befestigungslasche (13) im Bereich der Anlage mit der Vorderschale (3) und Hinterschale (2), vorzugsweise durch Laserschweißen, verbunden ist.

5. Metallstruktur nach einem der vorhergehenden Ansprüche, **dadurch gekennzeichnet, dass** die Vorderschale (3) und/oder Hinterschale (2) aus Stahl-Dünnblech bestehen.

6. Metallstruktur nach Anspruch 5, **dadurch gekennzeichnet, dass** das Stahl-Dünnblech eine Wanddicke von 0,4 mm bis 0,6 mm, vorzugsweise etwa 0,5 mm, aufweist.

7. Metallstruktur nach einem der vorhergehenden Ansprüche, **dadurch gekennzeichnet, dass** der Beschlag als Neigungsverstellvorrichtung für die Rückenlehne ausgebildet ist.

8. Fahrzeugsitz mit einer Metallstruktur nach einem der vorhergehenden Ansprüche.

## Claims

1. Metal structure (1) for a vehicle seat, in particular for the backrest of a motor vehicle seat, preferably comprising a deep-drawn front shell (3) and a deep-drawn rear shell (2), together with at least one fitting fixed to the metal structure with the aid of a fixing lug (13), the fixing lug being located between the front shell and the rear shell, **characterized in that** the front shell (3) and the rear shell (2) are in some areas separated, forming a cavity (12), the cavity having a constriction (16) serving to receive the fixing lug (13) and the fixing lug (13) being connected to the front shell (3) and the rear shell (2).

2. Metal structure (1) according to Claim 1, **characterized in that** the front shell (3) and the rear shell (2) each rest on a surface side of the fixing lug (13) and the fixing lug (13) is connected to the front shell (3) and the rear shell (2).

3. Metal structure according to Claim 1 or 2, **characterized in that** the fixing lug (13) of the fitting is of plate-shaped design.

4. Metal structure according to Claim 2 or 3, **characterized in that** the fixing lug (13) is connected, preferably by laser welding, in the area of contact with the front shell (3) and the rear shell (2).

5. Metal structure according to any one of the preceding claims, **characterized in that** the front shell (3) and/or the rear shell (2) is/are composed of thin sheet steel.

6. Metal structure according to Claim 5, **characterized in that** the thin sheet steel has a wall thickness of 0.4 mm to 0.6 mm, preferably approximately 0.5 mm.

7. Metal structure according to any one of the preceding claims, **characterized in that** the fitting takes the form of a seat back rake adjusting device for the back rest.

8. Vehicle seat having a metal structure according to any one of the preceding claims.

## Revendications

1. Structure métallique (1) pour un siège de véhicule, en particulier pour le dossier d'un siège de véhicule automobile, comprenant une coque avant (3) de préférence emboutie et une coque arrière (2) de préférence emboutie, ainsi qu'au moins une ferrure fixée à la structure métallique au moyen d'une patte de fixation (13), la patte de fixation étant disposée entre la coque avant et la coque arrière, **caractérisée en ce que** la coque avant (3) et la coque arrière (2) sont espacées en partie en formant une cavité (12), la cavité présentant un rétrécissement (16) recevant la patte de fixation (13) et la patte de fixation (13) étant connectée à la coque avant (3) et à la coque arrière (2).

2. Structure métallique (1) selon la revendication 1, **caractérisée en ce que** la coque avant (3) et la coque arrière (2) s'appliquent chacune contre un côté de surface de la patte de fixation (13) et la patte de fixation (13) est connectée à la coque avant (3) et à la coque arrière (2).

3. Structure métallique selon la revendication 1 ou 2, **caractérisée en ce que** la patte de fixation (13) de la ferrure est réalisée en forme de plaque.

4. Structure métallique selon la revendication 2 ou 3, **caractérisée en ce que** la patte de fixation (13) est connectée à la coque avant (3) et à la coque arrière (2) dans la région de l_{'}application, de préférence par soudage au laser.

5. Structure métallique selon l'une quelconque des revendications précédentes, **caractérisée en ce que** la coque avant (3) et/ou la coque arrière (2) se composent de tôle mince en acier.

6. Structure métallique selon la revendication 5, **caractérisée en ce que** la tôle mince en acier présente une épaisseur de paroi de 0,4 mm à 0,6 mm, de préférence d'environ 0,5 mm.

7. Structure métallique selon l'une quelconque des revendications précédentes, **caractérisée en ce que** la ferrure est réalisée sous forme de dispositif de réglage de l'inclinaison pour le dossier.

8. Siège de véhicule comprenant une structure métallique selon l'une quelconque des revendications précédentes.
